# EUROPÄISCHE PATENTANMELDUNG

(11) **EP 3 498 743 A1**
(43) Veröffentlichungstag der Anmeldung: **19.06.2019**
(21) Anmeldenummer: 17206871.0
(22) Anmeldetag: 13.12.2017
(51) Int. Cl.: C08G 2/30, C08G 2/34, C08G 18/10, C08G 18/56

(54) **VERFAHREN ZUR HERSTELLUNG EINES POLYOXYMETHYLEN-GRUPPEN ENTHALTENDEN PRÄPOLYMERS**

(71) Anmelder: Covestro Deutschland AG, 51373 Leverkusen (DE)
(72) Erfinder: GÜRTLER, Christoph, 50735 Köln (DE); MÜLLER, Thomas Ernst, 52074 Aachen (DE); BIZZARRI, Claudia, 52074 Aachen (DE); LEVEN, Matthias, 51069 Köln (DE); LEITNER, Walter, 52066 Aachen (DE); WINKELHAUS, Daniel, 52066 Aachen (DE)
(74) Vertreter: Levpat

(57) **Zusammenfassung**

Die vorliegende Erfindung betrifft ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung, wobei die Polyolkomponente ein OH-Endgruppen enthaltendes Polyoxymethylen umfasst, dessen OH-Endgruppen nicht Teil von Carboxylgruppen sind. Die Reaktion wird in Gegenwart einer ionischen Fluorverbindung durchgeführt, wobei die ionische Fluorverbindung eine koordinativ gesättigte Verbindung ist, wobei die die ionische Fluorverbindung einen Fluor-Massenanteil von größer als 20 Gewichts-% Fluor, bezogen auf die molekulare Masse der anionischen Komponente aufweist, wobei die gegenüber OH-Gruppen reaktive Verbindung ausgewählt ist aus der Gruppe der Monoisocyanate, Polyisocyanate, cyclische Ester und Alkylenoxide und die Reaktion in Gegenwart eines Katalysators durchgeführt wird. Die Erfindung betrifft weiterhin ein durch das erfindungsgemäße Verfahren erhältliches Präpolymer sowie dessen Verwendung für die Herstellung eines Polyurethanpolymers.

## Beschreibung

Die vorliegende Erfindung betrifft ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung, wobei die Polyolkomponente eine OH-Endgruppen enthaltendes Polyoxymethylen umfasst. Sie betrifft weiterhin ein durch das erfindungsgemäße Verfahren erhältliches Präpolymer sowie dessen Verwendung für die Herstellung eines Polyurethanpolymers.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als C₁-Baustein kommt insbesondere Formaldehyd in Frage. Dieser ist nicht an die Verfügbarkeit von Erdöl gebunden.

Formaldehyd lässt sich zu Polyoxymethylen (POM) polymerisieren. Werden polymere Polyole als Starter verwendet, erhält man hierdurch Polyoxymethylen-Copolymere. WO 2014/095679 A1 beschreibt ein Verfahren zur Herstellung von NCO-modifizierten Polyoxymethylen-Copolymeren, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Polyoxymethylen-Copolymer erhalten wird. Es werden zwar Polyisocyanate als mögliche Reagenzien zur NCO-Modifizierung genannt, aber die Beispiele dieser Patentanmeldung offenbaren lediglich Tolylisocyanat, ein Monoisocyanat. Mit Tolylisocyanat lassen sich jedoch keine Polyurethane erhalten.

Ebenfalls ist es möglich, Formaldehyd zu oligomeren Polyoxymethylen-Polyolen umzusetzen. Mit einem Molekulargewicht im Bereich von ≥ 500 bis < 4500 g/mol sind diese oligomeren Polyoxymethylen-Polyolen unter dem Namen Paraformaldehyd bekannt.

Paraformaldehyd depolymerisiert bereits bei niedrigen Temperaturen von ≥ 95 °C unter Freisetzung von gasförmigem Formaldehyd (G. Reuss, W. Disteldorf, A. O. Gamer, A. Hilt, Ullmann's Encyclopedia of Industrial Chemistry; Eintrag Formaldehyd, Vol.15 735-768).

Die Umsetzung von niedermolekularen Polyoxymethylenglykolen mit einem Überschuss an organischen Diisocyanaten in Lösung zu Isocyanat-terminierten Materialien ist bekannt aus US 3,575,930. Dazu wird Paraformaldehyd mit Dioxan extrahiert und ungelöster höhermolekulare Paraformaldehyd durch Filtration abgetrennt. Die weitere Reaktion mit den organischen Diisocyanaten wird in einer Mischung aus siedendem Dioxan und Benzol bei einer Temperatur von 90-92 °C durchgeführt. Polyoxymethylenglykole der Formel HO(CH₂O)ₙH mit Polyoxymethylen-Blöcken länger als n ≥ 65 können nicht umgesetzt werden. In der Schrift ist ebenfalls ist die Umsetzung der erhaltenen Isocyanat-terminierten Polymere von Polyoxymethylenglykol zu Polyurethan-Materialien durch Umsetzung mit Diolen oder Aminen offenbart.

Die Schrift US 1,070,820 beschreibt ein Verfahren zur Herstellung von hochmolekularen Polyurethan-Harzen umfassend den Schritt der Reaktion eines Polyisocyanates und einer Polyhydroxy-Verbindung, in der zumindest ein Teil der eingesetzten Polyhydroxy-Verbindung ein Polymethylen ist, das alkoholische Endgruppen und ein Molekulargewicht von 500 bis 4000 aufweist. Gemäß der in Beispiel 1 beschriebenen Methode wird die Polyhydroxy-Verbindung aus Trioxan hergestellt und anschließend in siedendem n-Propanol in Gegenwart von wässriger Natriumhydroxid-Lösung depolymerisiert. Durch den Schritt der Depolymerisation wird eine geringe Ausbeute in Höhe von 67% erhalten (945 Anteile Produkt minus 13,5 Anteile eingebautes Dioxolan bezogen auf 1215 Anteile eingesetztes Trioxan). Durch die Verwendung von n-Propanol in der Depolymerisation werden mono-funktionelle Verbindungen erhalten, die nicht für die Herstellung von Polyurethanen geeignet sind.

Die Schrift CN 102153717 beschreibt die Copolymerisation von Hexafluoro-Bisphenol-A mit Paraformaldehyd über Alkylierung der aromatischen Gruppen in Hexafluoro-Bisphenol-A unter Einsatz von Bortrifluorid als Katalysator. Die erhaltenen Polymere sind nicht für die Herstellung von Polyurethanen geeignet.

Nach dem bisherigen Stand der Technik wird die Umsetzung von Polyoxymethylen-Polyolen bei verhältnismäßig hohen Temperaturen durchgeführt. Bei Temperaturen oberhalb von 80 °C tritt jedoch merklich die Depolymerisation der Polyoxymethylen-Polyole ein. Durch die hohen Temperaturen nach den Verfahren gemäß dem bisherigen Stand der Technik wird während der Reaktion monomerer Formaldehyd freigesetzt. Dies stellt zum einen ein Sicherheitsproblem dar, zum anderen es kommt zu einer Verringerung des Molekulargewichts des eingesetzten Polyoxymethylen-Polyols. Auf Grund der geringen Löslichkeit von Polyoxymethylen-Polyolen mit langen Polyoxymethylen-Blöcken in Dioxan, Epoxiden oder Polyethern können diese nicht umgesetzt werden oder werden nur langsam umgesetzt.

Die vorliegende Erfindung hat sich die Aufgabe gestellt, ein verbessertes Verfahren zur Herstellung von Polyoxymethylen-Gruppen enthaltenden Präpolymeren bereitzustellen, bei welchem die Reaktion bei Temperaturen unterhalb der Depolymerisationstemperatur von Polyoxymethylen-Polyolen durchgeführt werden kann

Erfindungsgemäß gelöst wird diese Aufgabe durch ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung,
wobei die Polyolkomponente ein OH-Endgruppen enthaltendes Polyoxymethylen umfasst, dessen OH-Endgruppen nicht Teil von Carboxylgruppen sind,
**dadurch gekennzeichnet, dass**
die Reaktion in Gegenwart einer ionischen Fluorverbindung durchgeführt wird,
wobei die ionische Fluorverbindung eine koordinativ gesättigte Verbindung ist,
wobei die die ionische Fluorverbindung einen Fluor-Massenanteil von größer als 20 Gewichts-% Fluor, bezogen auf die molekulare Masse der anionischen Komponente aufweist,
wobei die gegenüber OH-Gruppen reaktive Verbindung ausgewählt ist aus der Gruppe der Monoisocyanate, Polyisocyanate, cyclische Ester und Alkylenoxide und
die Reaktion in Gegenwart eines Katalysators durchgeführt wird.

Überraschenderweise ermöglichen die im erfindungsgemäßen Verfahren eingesetzten Fluorverbindungen die Umsetzung der OH-Endgruppen enthaltenden Polyoxymethylene bei niedrigen Temperaturen unterhalb von ≤ 95°C und vermeiden die Verringerung des Molekulargewichts der eingesetzten OH-Endgruppen enthaltenden Polyoxymethylene während der Reaktion.

Als Fluorverbindungen kommen grundsätzlich koordinativ gesättigte organische und anorganische Fluorverbindungen mit einem Massenanteil von größer als 20 Gewichts-% Fluor, bevorzugt größer als 30 Gewichts-% Fluor und besonders bevorzugt größer als 40 Gewichts-% Fluor, bezogen bei ionischen Fluorverbindungen auf die molekulare Masse der anionischen Komponente in Frage. Unter koordinativ gesättigten Fluorverbindungen im Sinne der Erfindung werden Verbindungen verstanden, die unter den gewählten Reaktionsbedingungen nicht mit Lewis-Basen reagieren und durch Komplexbildungsreaktionen keine zusätzlich neuen Atome oder Atomgruppen aufgenommen werden können. Davon abzugrenzen sind beispielsweise Elementtrifluoride EF₃ mit E = Element der III. und V. Hauptgruppe, die nicht für das erfindungsgemäße Verfahren geeignet sind.

Ohne auf eine Theorie festgelegt zu sein wird angenommen, dass die Gegenwart der Fluorverbindung die Wechselwirkung zwischen benachbarten Polyoxymethylen-Ketten reduziert und somit die Löslichkeit des Produkts verbessert und die Verfügbarkeit des Polyoxymethylen-Gruppen enthaltenden Edukts für die Umsetzung mit der gegenüber OH-Gruppen reaktiven Verbindung erhöht. Insgesamt kann so die Funktionalisierung des Polyoxymethylen-Gruppen enthaltenden Edukts bei niedrigen Temperaturen durchgeführt werden. Im Fall von Lösungsmitteln, welche nicht mit gegenüber OH-Gruppen reaktiven Verbindungen reagieren und in welchen beispielsweise Paraformaldehyd überhaupt nicht löslich ist, kann so erst eine Reaktion zustande kommen.

Erfindungsgemäß mit eingeschlossen in den Begriff des OH-Endgruppen enthaltendes Polyoxymethylens sind sowohl Polyoxymethylen-Homopolymere einschließlich Paraformaldehyd als auch Copolymere, welche Polyoxymethyleneinheiten enthalten.

Das OH-Endgruppen enthaltende Polyoxymethylen kann die einzige Komponente der Polyolkomponente darstellen. Es ist aber auch möglich, dass ein weiteres oder mehrere weitere Polyole in der Polyolkomponente anwesend sind. Es sei klargestellt, dass die OH-Endgruppe des Polyoxymethylens nicht Teil einer Carboxylgruppe C(O)OH ist.

Im erfindungsgemäßen Verfahren sind die Fluorverbindung, das OH-Endgruppen enthaltende Polyoxymethylen und die gegenüber OH-Endgruppen reaktive Verbindung verschieden.

Es ist weiterhin vorgesehen, dass die gegenüber OH-Gruppen reaktive Verbindung ausgewählt ist aus der Gruppe der Monoisocyanate, Polyisocyanate, cyclische Ester und/oder Alkylenoxide. Das Isocyanat kann insbesondere ein aliphatisches oder aromatisches Di- oder Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Ein geeigneter cyclischer Ester ist ε-Caprolacton. Bevorzugte Alkylenoxide sind Ethylenoxid, Propylenoxid und Styroloxid.

Die Reaktion wird vorzugsweise in Gegenwart eines entsprechenden Katalysators durchgeführt. Im Fall von Polyisocyanaten als OH-reaktive Komponente können Urethanisierungskatalysatoren wie Dibutylzinndilaurat (DBTL) Verwendung finden. Werden Alkylenoxide eingesetzt, können beispielsweise Doppelmetallcyanidverbindungen (DMC) die Reaktion katalysieren.

Ausführungsformen und weitere Aspekte der vorliegenden Erfindung werden nachfolgend beschrieben. Sie können beliebig miteinander kombiniert werden, sofern sich aus dem Kontext nicht eindeutig das Gegenteil ergibt.

In einer Ausführungsform weist das Polyoxymethylen ein zahlenmittleres Molekulargewicht von < 4500 g/mol auf. Das Molekulargewicht kann durch Gelpermeationschromatographie gegen Polypropylenglykolstandards mit Chloroform als Eluent bestimmt werden und beträgt vorzugsweise ≤ 2800 g/mol und besonders bevorzugt ≤ 1200 g/mol.

In einer weiteren Ausführungsform ist das Polyoxymethylen Paraformaldehyd.

In einer weiteren Ausführungsform ist das Polyoxymethylen aus der Polymerisation von Formaldehyd in Gegenwart einer Starterverbindung mit mindestens einem Zerewitinoff-aktiven H-Atom erhältlich. Beispiele für Starterverbindungen sind Polyetherpolyole, Polyesterpolyole, Polyetheresterpolyole, Polycarbonatpolyole und/oder Polyacrylatpolyole. Bevorzugt ist die Stoffklasse der Polyetherpolyole. Die Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 2000 g/mol aufweisen.

Durch Umsetzung von Formaldehyd oder einer Formaldehyd-Vorstufe mit einer Starterverbindung mit mindestens 2 Zerewitinoff-aktiven H-Atomen in Gegenwart eines Katalysators oder Umsetzung einer Formaldehyd-Vorstufe mit einer OH-Funktionalität von mindestens 1,8 und Alkylenoxiden in Gegenwart eines Katalysators werden ebenfalls Polyoxymethylenpolyole erhalten.

In der Umsetzung der Formaldehyd-Vorstufe mit einer Starterverbindung kann Formaldehyd in gasförmigem Zustand, ggf. als Mischung mit Inertgasen wie z.B. Stickstoff oder Argon oder als Mischung mit gasförmigem, überkritischem oder flüssigem Kohlendioxid, oder als FormaldehydLösung eingesetzt werden. Bei Formaldehyd-Lösungen kann es sich um wässrige Formaldehyd-Lösungen mit einem Formaldehyd-Gehalt zwischen 1 Gew.% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, *N*,*N*-Dimethylformamid (DMF), *N*,*N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N*,*N*-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, *N*,*N*-Dimethylformamid (DMF), *N*,*N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N*,*N*-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

In der Herstellung des Polyoxymethylenpolyols werden die Polyoxymethylen-Einheiten entweder direkt oder indirekt über ein oder mehrere weitere Comonomere oder Spacer mit den zusätzlichen Oligomeren verknüpft. Auch eine Verknüpfung mehrerer Polyoxymethylen-Einheiten untereinander über ein oder mehrere weitere Comonomere ist möglich. In einer weiteren Ausführungsform des erfindungsgemäßen Verfahrens erfolgt daher in der Herstellung des Polyoxymethylenpolyols die Polymerisation in Gegenwart eines weiteren Comonomers. Als weitere Comonomere können beispielsweise zyklische Ether, insbesondere Alkylenoxide wie z.B. Ethylenoxid, Propylenoxid oder Styroloxid, Oxetan, THF, Dioxan, zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid, Glutarsäureanhydrid oder Phthalsäureanhydrid zum Einsatz kommen. Bevorzugte weitere Comonomere sind Alkylenoxide, zyklische Acetale und zyklische Ester, besonders bevorzugte weitere Comonomere sind Ethylenoxid, Propylenoxid, 1,3-Dioxolan, 1,3-Dioxepan und ε-Caprolacton.

Die Dosierung weiterer Comonomere kann in Reinsubstanz oder in Lösung erfolgen. In einer alternativen Ausführungsform erfolgt die Dosierung weiterer Comonomere im Gemisch mit Formaldehyd bzw. der Formaldehyd-Quelle. Die Dosierung weiterer Comonomere kann vor der Dosierung, parallel zu der Dosierung oder im Anschluss an die Dosierung von Formaldehyd bzw. der Formaldehyd-Quelle erfolgen.

Bevorzugt wird bei der Umsetzung der Formaldehyd-Vorstufe mit einer Starterverbindung der Formaldehyd in gasförmigem Zustand und ein Alkylenoxid als Comonomer eingesetzt.

In der Herstellung des Polyoxymethylenpolyols ist der Katalysator vorzugsweise ausgewählt aus der Gruppe der Alkalihydroxide, Doppelmetallcyanidverbindungen, Zinn- und Bismutorganischen Verbindungen, Lewis-Säuren. Als Katalysator werden Verbindungen eingesetzt, die die Polymerisation von Formaldehyd katalysieren. Hierbei kann es sich um basische Katalysatoren handeln oder um Lewis-saure Katalysatoren, die als Lewis-saures Zentrum z.B. ein Metall der dritten, vierten oder fünften Hauptgruppe, insbesondere Bor, Aluminium, Zinn oder Bismut, ein Metall der dritten oder vierten Nebengruppe oder der Reihe der Lanthanoide, Vanadium, Molybdän, Wolfram oder ein Metall der achten bis zehnten Nebengruppe, insbesondere Zink enthalten. Bevorzugt sind Lewis-saure Katalysatoren.

Beispiele für basische Katalysatoren sind tertiäre oder aromatische basische Amine wie z.B. Triethylamin sowie andere Trialkylamine, Pyridin sowie ein- oder mehrfach substituierte PyridinDerivate, N-Alkyl- oder N-Aryl-imidazol, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-en (TBD), 7-Methyl-1,5,7-triazabicyclo[4.4.0]dec-5-en (MTBD).

In einer weiteren Ausführungsform beträgt die durchschnittliche Hydroxyl-Funktionalität des Polyoxymethylens ≥ 1,8.

In einer weiteren Ausführungsform weist die Fluorverbindung einen Massenanteil von größer als 20 Gewichts-% Fluor, bevorzugt größer als 30 Gewichts-% Fluor und besonders bevorzugt größer als 40 Gewichts-% Fluor, bezogen bei ionischen Fluorverbindungen auf die molekulare Masse der anionischen Komponente.

In einer weiteren Ausführungsform ist die Fluorverbindung eine koordinativ gesättigte anionische Verbindung, die ein vollständiges oder stabiles Elektronenoktett aufweist und somit keine Reaktivität gegenüber Lewis-Basen zeigt. Bevorzugte anionische Fluorverbindungen sind F⁻, EₓF_{yx}]⁻ (E = B, Al, Ga, In, Tl, N, P, As, Sb oder Bi, wobei Y die Oxidationszahl des Elements E und x null oder eine ganze Zahl ≤ 6 darstellt), [R_{3-z}F_{z}]⁻ (R = Alkyl oder SO₃ und z null oder eine ganze Zahl ≤ 6 darstellt),. Geeignete Kationen der anionischen fluorhaltigen Salze sind beispielsweise Tetraalkylammonium, Tetraarylammonium, Tetraalkylphosphonium, Tetraarylphosphonium.

In einer weiteren Ausführungsform die ionische Fluorverbindung ein, Hexafluoroaluminat-Salz, Hexafluoroantimonat-Salz, Hexafluoroargentat-Salz, Hexafluoroarsenat-Salz, Hexafluoroaurat-Salz, Hexafluorocobaltat-Salz, Hexafluorocuprat-Salz, Hexafluorogermanat-Salz, Hexafluoronickelat-Salz, Hexafluorotantalat-Salz, Hexafluorovanadat-Salz, Tetrafluorammoniumion-Salz, Tetrafluoroantimonat-Salz, Tetrafluoroargentat-Salz, Tetrafluoroaurat-Salz, Tetrafluorobismutat-Salz, Tetrafluoroborat-Salz und/oder Hexafluorophosphat-Salz, bevorzugt ein Fluorid-Salz, Tetrafluoroborat-Salz und/oder Hexafluorophosphat-Salz ist.

Besonders bevorzugt ist die ionische Fluorverbindung NBu4F × 3 H2O, NBu4PF6 oder NBu4BF4.

Geeignete Kationen der anionischen fluorhaltigen Salze sind insbesondere Tetraalkylammonium-Kationen. In einer weiteren Ausführungsform wird die Reaktion bei einer Temperatur von ≥ 30 °C bis ≤ 95 °C bevorzugt bei ≥ 30 °C bis ≤ 70 °C durchgeführt. Besonders bevorzugte Reaktionstemperaturen sind ≥ 40 °C bis ≤ 60 °C.

In einer weiteren Ausführungsform ist die gegenüber OH-Gruppen reaktive Verbindung ein Mono- oder Polyisocyanat und die Reaktion wird bei einem NCO-Index von ≥ 90 bis ≤ 800 durchgeführt. Vorzugsweise beträgt der NCO-Index ≥ 100 bis ≤ 200.

In einer weiteren Ausführungsform umfasst die Polyolkomponente ein weiteres Polyol, das ausgewählt ist aus der Gruppe der Polyetherpolyole, Polyesterpolyole, Polyetheresterpolyole, Polycarbonatpolyole, Polyethercarbonatpolyole, und/oder Polyacrylatpolyole.

Die vorliegende Erfindung betrifft weiterhin ein Polyoxymethylen-Gruppen enthaltenden Präpolymer, welches durch ein erfindungsgemäßes Verfahren erhältlich ist.

In einer Ausführungsform weist das Präpolymer einen Gehalt an Isocyanatgruppen (DIN EN ISO 11 909) von ≥ 10 Gewichts-% auf. Vorzugsweise beträgt der Gehalt > 20 Gewichts-%.

In einer weiteren Ausführungsform weist das Präpolymer einen Gehalt an Polyoxymethylengruppen, bestimmt mittels Integration der Signale im ¹H-NMR-Spektrum, von ≥ 10 Gewichts-% auf. Vorzugsweise beträgt der Gehalt ≥ 20 Gewichts-%.

Ein weiterer Gegenstand der vorliegenden Erfindung ist ein Verfahren zur Herstellung eines Polyurethanpolymers, umfassend die Reaktion einer Polyolkomponente mit einer Isocyanatkomponente, wobei die Polyolkomponente ein erfindungsgemäßes Präpolymer umfasst.

Das Isocyanat kann ein aliphatisches oder aromatisches Di- oder Polyisocyanat sein. Beispiele sind 1,4-Butylendiiocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

### Beispiele

Im Folgenden wird die Durchführung des erfindungsgemäßen Verfahrens anhand ausgewählter Beispiele beschrieben, ohne jedoch darauf beschränkt zu sein.

### Eingesetzte Polyole

Paraformaldehyd Paraformaldehyd (Markenname: Granuform 96) wurde vom Hersteller Ineos AG bezogen. Die zahlenmittlere Molekularmasse des Produkts wird mit 450 g/mol angegeben.

### Eingesetzte Isocyanate

4-Toluolisocyanat
TDI 2,4-Toluoldiisocyanat

### Beschreibung der Methoden:

¹H-NMR-Spektroskopie: Die Messungen erfolgten auf einem Bruker AV400 (400 MHz); die Kalibrierung der chemischen Verschiebungen erfolgte relativ zum Lösungsmittelsignal (CDCl₃, δ = 7,26 ppm, (CF₃)₂CDOD, δ = 4,41 (m) ppm); s = Singulett, m = Multiplett, bs = verbreitertes Singulett, kb = komplexer Bereich.

Der Gehalt an Polyoxymethylengruppen wurde mittels Integration der Signale im ¹H-NMR-Spektrum bestimmt und ist in Gewichts-% angegeben. Für die Bestimmung des Gehalts an Polyoxymethylengruppen wurden folgende Signale verwendet.

4,40-5,20: Polyoxymethylengruppe der Oxymethylen-Einheiten, Fläche der Resonanz entspricht zwei H Atomen
¹³C-NMR-Spektroskopie: Die Messungen erfolgten auf einem Bruker AV400 (100 MHz); die Kalibrierung der chemischen Verschiebungen erfolgte relativ zum Lösungsmittelsignal (CDCl₃, δ = 77,16 ppm, (CF₃)₂CDOD, δ = 68,07 (m) ppm); APT (attached proton test): CH₂, C_{quart}: positives Signal (+); CH, CH₃: negatives Signal (-); HMBC: Hetero multiple bond correlation; HSQC: Heteronuclear single-quantum correlation.

Infrarot (IR)-Spektroskopie: Die Messungen erfolgten auf einem Bruker Alpha-P FT-IR-Spektrometer; die Messungen erfolgten in Reinsubstanz; Signalintensitäten: vs = very strong, s = strong, m = medium, w = weak, vw = very weak; b = verbreiterte Bande.

Electrospray-Massenspektrometrie (ESI-MS): Die Messungen erfolgten auf einem LTQ Orbitrap XL; Proben wurden mit MeOH verdünnt.

MALDI-MS: 4700 Proteomics Analyzer; Applied Biosystems. Die Proben wurden in Aceton gelöst und in der Matrix Dithranol/LiCl vermessen. Der angegebene Molekülpeak M bezieht sich auf Polyoxymethylen Präpolymere der Formel CH₃-C₆H₄-N(H)-C(O)-O-(CH₂CH(CH₃))-(CH₂O)ₙ-C(O)-N(H)-C₆H₄-CH₃, wobei n die mittlere Kettenlänge der Polyoxymethylen Blöcke darstellt und das eingesetzte Paraformaldehyd HO(CH₂CH(CH₃))OH enthält.

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Tetrahydrofuran (GPC grade), Flussrate 1.0 ml/min; Säulenkombination: PSS SDV Vorsäule 8×50 mm (5 µm), 2× PSS SDV linear S 8×300 ml (5 µm). Polypropylenglykolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

TGA (Thermogravimetrische Analysen) wurden auf einem Mettler Toledo TGA/DSC 1 durchgeführt. Es wurde zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentiales Auswerteverfahren angewendet. Als Zersetzungstemperatur wird der "Midpoint" angegeben.

Die Bestimmung der Glasübergangstemperatur erfolgte per Differential Scanning Calorimetry (DSC) auf einem DSC 1 STARe der Firma Mettler Toledo. Die Probe wurde bei einer Heizrate von 10 K/min über vier Heizzyklen von -80 °C bis +200 °C vermessen. Die Glasübergangstemperatur T_{g} wurde über ein tangentiales Verfahren ausgewertet und ist für den zweite Aufheizzyklus angegeben.

Der Gehalt an Isocyanatgruppen wurde gemäß DIN EN ISO 11 909 bestimmt.

### Beispiel 1: Herstellung eines Carbamat-geschützten Polyoxymethylen-Polyols durch Umsetzung von Paraformaldehyd mit 4-Tolylisocyanat unter Verwendung eines Fluorid-Salzes

In einem Kolben wurde 450 mg (1 mmol) Paraformaldehyd in 15 mL Dioxolan vorgelegt. Zu der Suspension wurden 315 mg (1 mmol) Tetrabutylammoniumfluorid-Trihydrat (NBu₄F × 3 H₂O, TBAF) und 6 mg (0,01 mmol) Dibutylzinndilaurat (DBTL) zugegeben und unter Rühren auf 60 °C erwärmt. Zu dem Gemisch wurde 1070 mg (8 mmol) 4-Tolylisocyanat zugegeben und das Reaktionsgemisch für drei Stunden bei 60 °C gerührt. Durch Zentrifugieren des Reaktionsgemisches über 15 Minuten bei 5000 rpm wurde ein weißer Feststoff von der oberen flüssigen Phase abgetrennt. Aus der flüssigen Phase wurde das Lösungsmittel in einem partiellem Vakuum entfernt und das Produktgemisch als weißer Feststoff erhalten.

Während der Umsetzung löste sich das Paraformaldehyd zunächst vollständig auf und es wurde eine klare Lösung erhalten. Dies belegt, dass Paraformaldehyd in Gegenwart eines Fluorid-Salzes vollständig im Reaktionsgemisch löslich ist. Erst bei längerer Reaktionszeit bildete sich erneut eine kleine Menge eines weißen Feststoffes, der Abzentrifugiert wurde.
Ausbeute: 1200 mg (29 % unter Berücksichtigung von 720 mg Harnstoff und 260 mg TBAF)
¹H-NMR-Spektroskopie (400 MHz, CDCl₃): δ = 2,23 (s, 24H, CH₃), 4,7-4,9 (m, 14H, OCH₂), 5,3 (s, 2H, OCH₂-O(C=O)), 6,91-7,25 (m, 32H, CH*ₐᵣ*).
¹³C-APT-NMR-Spektroskopie (100 MHz, CDCl₃): δ = 20,5 (-, Tol-CH₃), 66,1 (+), 66,7 (+), 69,6 (+), 78,6 (+), 113,6 (-), 115,1 (-), 129,7 (-), 130,0 (-), 130,8 (+), 146,4 (+, C=O).

Das Auftreten an Signalen im ¹H-NMR Spektrum im Bereich 4,7-5,3 ppm, sowie einer Vielzahl an Signalen mit positiver Polarität im ¹³C-APT-NMR-Spektrum im Bereich 66,1-78,6 ppm zeigt das Vorliegen von Oxymethylen-Gruppen.

Das HSQC-NMR Spektrum zeigt eine Kopplung der Signale bei 4,7-4,9 sowie 5,3 ppm zu ¹³C Signalen bei 66-83 ppm, die im APT eine positive Polarität besitzen. Somit können diese Signale zu Oxymethylen-Gruppen zugeordnet werden. Das HMBC-NMR Spektrum zeigt eine Fernkopplung des Carbamat ¹³C Signals bei 146,3 ppm zu den CH₂ -Gruppen bei 4,7-4,9 sowie 5,3 ppm. Damit wurde gezeigt, dass die Toluylcarbamat-Gruppe kovalent an Oxymethylen-Gruppen gebunden sind.

IR (in cm⁻¹): 3305 (b, vw, v(NH)), 2916 (w), 2854 (w), 1639 (w), 1612 (w, v(C=O)), 1514 (s), 1395 (w), 1323 (w), 1233 (w), 1203 (s), 1002 (w), 958 (w), 884 (w), 799 (s), 700 (w), 507 (w).

Das IR-Spektrum weist Banden für die NH und C=O Streckschwingung, auf die der Carbamat Einheit zugewiesen werden können. Das IR-Spektrum ist nicht identisch mit dem von Paraformaldehyd; darüber hinaus deutet das Fehlen der NCO Bande bei 2261 cm⁻¹ auf die erfolgreiche Umsetzung des Isocyanats hin.

ESI-MS: m/z(%) 822,80444(5) [M, berechnet für C₃₅H₅₄N₂O₂₀, n = 16: 822,32699], 242,28387(100) [CH₃-C₆H₄-NH-C(O)-NH-C₆H₄-CH₃, berechnet für C₁₅H₁₆N₂O: 240,12626].

Per GPC wurde ein zahlenmittleres Molekulargewicht Mₙ = 1571 g/mol und ein Polydispersitätsindex PDI = 1,5 ermittelt. Ein weiteres Signal bei einem zahlenmittleren Molekulargewicht Mₙ = 237 g/mol, Polydispersitätsindex PDI = 1,01 kann dem Harnstoff zugerechnet werden, der bei der Reaktion des Isocyanates mit dem Kristallwasser des TBAF entstanden ist.

Per thermogravimetrischer Analyse (TGA) wurde eine Zersetzungsstufe ermittelt:
Stufe 1: Zersetzungstemperatur: 228,7 °C (relativer Gewichtsverlust 92,9 %)

### Beispiel 2: Herstellung eines Carbamat-geschützten Polyoxymethylen-Polyols durch Umsetzung von Paraformaldehyd mit 4-Tolylsiocyanat unter Verwendung eines Hexafluorophosphat-Salzes

Während der Umsetzung löste sich das Paraformaldehyd zunächst vollständig auf und es wurde eine klare Lösung erhalten. Dies belegt, dass Paraformaldehyd in Gegenwart eines Hexafluorophosphat-Salzes vollständig im Reaktionsgemisch löslich ist. Erst bei längerer Reaktionszeit bildete sich erneut eine kleine Menge eines weißen Feststoffes, der Abzentrifugiert wurde.

Es wurde analog zur Vorgehensweise in Beispiel 1 vorgegangen, jedoch wurden anstelle von Tetrabutylammonium-Hexafluorophosphat anstelle von Tetrabutylammoniumfluorid-Trihydrat sowie 266 mg (2 mmol) 4-Tolylisocyanat eingesetzt.

Ausbeute: 773 mg (53% unter Berücksichtigung von 387 mg Tetrabutylammonium-Hexafluorophosphat)

Die NMR spektroskopischen Daten des erhaltenen Produktes stimmen mit den Daten aus Beispiel 1 überein.

Per GPC wurde ein zahlenmittleres Molekulargewicht Mₙ = 779 g/mol und ein Polydispersitätsindex PDI = 1,1 ermittelt.

### Beispiel 3: Herstellung eines Carbamat-geschützten Polyoxymethylen-Polyols durch Umsetzung von Paraformaldehyd mit 4-Tolylisocyanat unter Verwendung eines Tetrafluoroborat-Salzes

Es wurde analog zur Vorgehensweise in Beispiel 1 vorgegangen, jedoch wurden Tetrabutylammonium-Tetrafluoroborat anstelle von Tetrabutylammoniumfluorid-Trihydrat sowie 266 mg (2 mmol) 4-Tolylisocyanat eingesetzt.

Während der Umsetzung löste sich das Paraformaldehyd zunächst vollständig auf und es wurde eine klare Lösung erhalten. Dies belegt, dass Paraformaldehyd in Gegenwart eines Tetrafluoroborat-Salzes vollständig im Reaktionsgemisch löslich ist. Erst bei längerer Reaktionszeit bildete sich erneut eine kleine Menge eines weißen Feststoffes, der Abzentrifugiert wurde.

Ausbeute: 879 mg (77 % unter Berücksichtigung von 329 mg Tetrabutylammonium-Tetrafluoroborat)

Die NMR spektroskopischen Daten des Produktes stimmen mit den Daten aus Beispiel 1 überein.

Per GPC wurde ein zahlenmittleres Molekulargewicht Mₙ = 776 g/mol und ein Polydispersitätsindex PDI = 1,3 ermittelt.

### Vergleichsbeispiel 4 Herstellung eines Carbamat-geschützten Polyoxymethylen-Polyols durch Umsetzung von Paraformaldehyd mit 4-Tolylisocyanat unter Verwendung eines Chlorid-Salzes

Es wurde analog zur Vorgehensweise in Beispiel 1 vorgegangen, jedoch wurde Tetrabutylammoniumchlorid anstelle von Tetrabutylammoniumfluorid-Trihydrat sowie 266 mg (2 mmol) 4-Tolylisocyanat eingesetzt. Es wurde keine Reaktion zum Präpolymer beobachtet.

### Vergleichsbeispiel 5 Herstellung eines Carbamat-geschützten Polyoxymethylen-Präpolymers durch Umsetzung von Paraformaldehyd mit 4-Tolylsiocyanat ohne Verwendung einer Fluorverbindung

Es wurde analog zur Vorgehensweise in Beispiel 1 vorgegangen, jedoch wurde kein Tetrabutylammoniumfluorid-Trihydrat sowie 266 mg (2 mmol) 4-Tolylisocyanat eingesetzt. Es wurde eine langsame Reaktion zum Präpolymer beobachtet.

Die NMR spektroskopischen Daten des Produktes stimmen mit denen von Beispiel 1 überein.

Per GPC wurde ein zahlenmittleres Molekulargewicht Mₙ = 784 g/mol und ein Polydispersitätsindex PDI = 1,3 ermittelt.

### Vergleich

Die nachfolgende Tabelle gibt einen Vergleich der Resultate aus Beispielen 1 bis 3 und den Vergleichsbeispielen 4 und 5.

| Beispiel | Lösungsmittel | Additiv | Ausbeute | Mn | PDI |
|---|---|---|---|---|---|
| | | | [%] | [g/mol] | |
| 1 | Dioxolan | NBu₄F × 3 H₂O | 29 | 1571 | 1,5 |
| 2 | Dioxolan | NBu₄PF₆ | 53 | 779 | 1,1 |
| 3 | Dioxolan | NBu₄BF₄ | 77 | 776 | 1,3 |
| 4 (Vgl.) | Dioxolan | NBu₄Cl | Kein Produkt | - | - |
| 5 (Vgl.) | Dioxolan | - | Kein Produkt | - | - |

### Beispiel 6 Herstellung eines Carbamat-geschützten Polyoxymethylen-Präpolymers durch Umsetzung von Paraformaldehyd mit 4-Tolylsiocyanat unter Verwendung von 10 mol-% Fluorid-Salz

Es wurde analog zur Vorgehensweise in Beispiel 3 vorgegangen, jedoch wurden 10 mol% Tetrabutylammoniumfluorid-Trihydrat eingesetzt. Es wurde zu Beispiel 1 eine deutlich langsamere Reaktion beobachtet.

Ausbeute: 441 mg (57 % unter Berücksichtigung von 30 mg Tetrabutylammonium-Tetrafluoroborat)

Die NMR spektroskopischen Daten des Produktes stimmen mit Daten aus Beispiel 1 überein.

Per GPC wurde ein zahlenmittleres Molekulargewicht Mₙ = 837 g/mol und ein Polydispersitätsindex PDI = 1,4 ermittelt.

### Beispiel 7 Herstellung eines Carbamat-geschützten Polyoxymethylen-Präpolymers durch Umsetzung von Paraformaldehyd mit 4-Tolylsiocyanat unter Verwendung von 500 mol-% Fluorid-Salz

Es wurde analog zur Vorgehensweise in Beispiel 1 vorgegangen, jedoch wurden 500 mol% Tetrabutylammoniumfluorid-Trihydrat eingesetzt. Es wurde zu Beispiel 1 eine langsamere Reaktion beobachtet.
Ausbeute: 2090 mg (63 % unter Berücksichtigung von 1640 mg Tetrabutylammonium-Tetrafluoroborat)

Die NMR spektroskopischen Daten des Produktes stimmen mit den Daten aus Beispiel 1 überein.

Per GPC wurde ein zahlenmittleres Molekulargewicht Mₙ = 870 g/mol und ein Polydispersitätsindex PDI = 1,4 ermittelt.

### Vergleich

Die nachfolgende Tabelle gibt einen Vergleich der Resultate aus Beispielen 3 und 6 und den Vergleichsbeispielen 5 und 7.

| Beispiel | Additiv | | Ausbeute | Mₙ | PDI |
|---|---|---|---|---|---|
| | | [mol-%] | [%] | [g/mol] | |
| 5 (Vgl.) | NBu₄BF₄ | 0 | 68 | 784 | 1,3 |
| 6 | NBu₄BF₄ | 10 | 57 | 837 | 1,4 |
| 3 | NBu₄BF₄ | 100 | 77 | 776 | 1,2 |
| 7 (Vgl.) | NBu₄BF₄ | 500 | 63 | 870 | 1,4 |

## Patentansprüche

1. Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung,
wobei die Polyolkomponente ein OH-Endgruppen enthaltendes Polyoxymethylen umfasst, dessen OH-Endgruppen nicht Teil von Carboxylgruppen sind,
**dadurch gekennzeichnet, dass**
die Reaktion in Gegenwart einer ionischen Fluorverbindung durchgeführt wird,
wobei die ionische Fluorverbindung eine koordinativ gesättigte Verbindung ist,
wobei die die ionische Fluorverbindung einen Fluor-Massenanteil von größer als 20 Gewichts-% Fluor, bezogen auf die molekulare Masse der anionischen Komponente aufweist,
wobei die gegenüber OH-Gruppen reaktive Verbindung ausgewählt ist aus der Gruppe der Monoisocyanate, Polyisocyanate, cyclische Ester und Alkylenoxide und
die Reaktion in Gegenwart eines Katalysators durchgeführt wird.

2. Verfahren gemäß Anspruch 1, wobei das Polyoxymethylen ein zahlenmittleres Molekulargewicht von < 4500 g/mol aufweist.

3. Verfahren gemäß einem der Ansprüche 1 oder 2, wobei das Polyoxymethylen Paraformaldehyd ist.

4. Verfahren gemäß Anspruch 1 oder 2, wobei das Polyoxymethylen aus der Polymerisation von Formaldehyd in Gegenwart einer Starterverbindung mit mindestens einem Zerewitinoff-aktiven H-Atom erhältlich ist.

5. Verfahren gemäß einem der Ansprüche 1 bis 4, wobei die durchschnittliche Hydroxyl-Funktionalität des Polyoxymethylens ≥ 1,8 beträgt.

6. Verfahren gemäß einem der Ansprüche 1 bis 5, wobei die Fluorverbindung in einem molaren Verhältnis von ≥ 1:10 bis ≤ 150:1 bezogen auf die Menge des OH-Endgruppen enthaltenden Polyoxymethylens eingesetzt wird.

7. Verfahren gemäß einem der Ansprüche 1 bis 6, wobei die ionische Fluorverbindung ein, Hexafluoroaluminat-Salz, Hexafluoroantimonat-Salz, Hexafluoroargentat-Salz, Hexafluoroarsenat-Salz, Hexafluoroaurat-Salz, Hexafluorocobaltat-Salz, Hexafluorocuprat-Salz, Hexafluorogermanat-Salz, Hexafluoronickelat-Salz, Hexafluorotantalat-Salz, Hexafluorovanadat-Salz, Tetrafluorammoniumion-Salz, Tetrafluoroantimonat-Salz, Tetrafluoroargentat-Salz, Tetrafluoroaurat-Salz, Tetrafluorobismutat-Salz, Tetrafluoroborat-Salz und/oder Hexafluorophosphat-Salz, bevorzugt ein Fluorid-Salz, Tetrafluoroborat-Salz und/oder Hexafluorophosphat-Salz ist.

8. Verfahren gemäß einem der Ansprüche 1 bis 6, wobei die ionische Fluorverbindung NBu₄F × 3 H₂O, NBu₄PF₆ oder NBu₄BF₄ ist.

9. Verfahren gemäß einem der Ansprüche 1 bis 8, wobei die Reaktion bei einer Temperatur von > 30 °C bis ≤ 95 °C durchgeführt wird.

10. Verfahren gemäß einem der Ansprüche 1 bis 9, wobei die gegenüber OH-Gruppen reaktive Verbindung ein Polyisocyanat ist und die Reaktion bei einem NCO-Index von ≥ 90 bis ≤ 800 durchgeführt wird.

11. Präpolymer gemäß Anspruch 10 mit einem Gehalt an Isocyanatgruppen (DIN EN ISO 11 909) von ≥ 10 Gewichts-%.

12. Verfahren gemäß einem der Ansprüche 1 bis 11, wobei die Polyolkomponente ein weiteres Polyol umfasst, das ausgewählt ist aus der Gruppe der Polyetherpolyole, Polyesterpolyole, Polyetheresterpolyole, Polycarbonatpolyole, Polyethercarbonatpolyole, und/oder Polyacrylatpolyole.

13. Polyoxymethylen-Gruppen enthaltenden Präpolymer, erhältlich durch ein Verfahren gemäß einem der Ansprüche 1 bis 12.

14. Präpolymer gemäß Anspruch 11 oder 13 mit einem Gehalt an Polyoxymethylengruppen, bestimmt mittels Integration der Signale im ¹H-NMR-Spektrum, von ≥ 10 Gewichts-%.

15. Verfahren zur Herstellung eines Polyurethanpolymers, umfassend die Reaktion einer Polyolkomponente mit einer Isocyanatkomponente,
**dadurch gekennzeichnet, dass**
die Isocyanatkomponente ein Präpolymer gemäß einem der Ansprüche 10 bis 14 umfasst.
